# EUROPÄISCHE PATENTSCHRIFT

(11) **EP 3 038 848 B1**
(45) Veröffentlichungstag und Bekanntmachung des Hinweises auf die Patenterteilung: **18.10.2017**
(21) Anmeldenummer: 14755988.4
(22) Anmeldetag: 26.08.2014
(51) Int. Cl.: B60K 6/24, B60K 6/46, B60W 10/06, B60W 10/08, B60W 30/18, B60W 30/188, B60W 20/13, B60W 20/19

(54) **VERFAHREN ZUM ANTRIEB EINES KRAFTFAHRZEUGES SOWIE ANTRIEBSSYSTEM FÜR EIN KRAFTFAHRZEUG**
METHOD FOR DRIVING A MOTOR VEHICLE AND DRIVE SYSTEM FOR A MOTOR VEHICLE
PROCÉDÉ AINSI QUE SYSTÈME DE PROPULSION D'UN VÉHICULE AUTOMOBILE

(30) Priorität: 30.08.2013 DE 102013014457
(43) Veröffentlichungstag der Anmeldung: 06.07.2016
(73) Patentinhaber: Fraunhofer Gesellschaft zur Förderung der angewandten Forschung E.V., 80686 München (DE)
(72) Erfinder: MELZ, Tobias, 63303 Dreieich (DE); HEIM, Rüdiger, 64285 Darmstadt (DE); PFEIFFER, Thomas, 63801 Kleinostheim (DE)
(74) Vertreter: Rösler, Uwe
(86) Internationale Anmeldenummer: PCT/EP2014/002329
(87) Internationale Veröffentlichungsnummer: WO 2015/028147

(56) Entgegenhaltungen:
- DE-A1-102011 105 618
- US-A- 5 632 352

## Beschreibung

### Technisches Gebiet

Die Erfindung bezieht sich auf ein Verfahren zum Antrieb eines Kraftfahrzeuges, zu dessen ausschließlich elekromotorischen Fortbewegung wenigstens ein Elektromotor mittel- oder unmittelbar mit einer Antriebswelle des Kraftfahrzeuges oder wenigstens einer Antriebsnabe eines Rades des Kraftfahrzeuges verbunden ist. Der wenigstens eine Elektromotor wird über eine Energiespeichereinheit mit elektrischer Energie versorgt, die wiederum von einem Generator mit elektrischem Ladestrom gespeist wird, der von einem Gasmotor angetrieben wird.

### Stand der Technik

Die Elektromobilität gewinnt in Industrieländern zunehmend Interesse, jedoch ist die tatsächliche Verbreitung und Nutzung insbesondere von Elektrofahrzeugen weit geringer als von Industrie und Politik erwartet und erwünscht. Dies liegt zum einen an der nur geringen Reichweite elektromotorisch angetriebener Kraftfahrzeuge sowie überdies an den bislang noch zu hohen Anschaffungskosten. Die hohen Erwartungen des Verbrauchers in Bezug auf Komfort und Reichweite zwingt die Technologieentwicklung dazu, sämtliche an der elektromotorischen Antriebskette beteiligten Komponenten im Hinblick auf ihre Wirkungsgrade zu optimieren, wodurch die damit verbundenen Herstellkosten in gleicher Weis steigen. Beispielsweise werden hocheffiziente Synchronelektromotoren zum direkten Antrieb der Räder eingesetzt, zu deren Stromversorgung Lithium-Ionen-Akkus mit besonders hoher Energiedichte eingesetzt werden.

Zusätzlich haben vollelektrisch angetriebene Fahrzeuge neben dem derzeit noch erkennbaren Reichweitenproblem ein zusätzliches Betriebsproblem, das durch zu lange Ladezeiten der im KfZ mitgeführten elektrischen Energiespeichereinheit sowie mit einer zumindest bislang noch unzureichend verbreiteten Ladeinfrastruktur begründet ist.

Zur Vermeidung bzw. Minderung vorstehender Probleme werden Kraftfahrzeuge mit hybriden Antriebsvarianten angeboten, bei denen sowohl elektromotorische als auch verbrennungsbasierte Antriebstechniken zur Anwendung kommen. Insbesondere in Fällen, in denen sowohl der Verbrennungsmotor als auch wenigstens ein Elektromotor zum direkten Antrieb des Kraftfahrzeuges vorgesehen sind, bedarf es konstruktiv komplexer und damit in der Herstellung teurer Getriebe- und Kupplungseinheiten, die sich letztlich auch neben dem beträchtlichen Batterie- bzw. Akkumulatorgewicht merklich im Kraftfahrzeuggesamtgewicht widerspiegeln.

Demgegenüber sind hybride Antriebskonzepte für elektromotorisch angetriebene Kraftfahrzeuge bekannt, zu deren Fortbewegung wenigstens ein mit einer Antriebswelle verbundener Elektromotor dient, zu dessen Energieversorgung eine wiederaufladbare Batterie bzw. Akkumulator vorhanden ist. Zu Zwecken einer über die Ladekapazität der Batterie hinausgehende elektrische Energieversorgung dient eine zusätzlich vorgesehene Verbrennungskraftmaschine, bspw. in Form eines Diesel- oder Benzinmotors, die mit einem Generator zur Stromerzeugung verbunden ist, der dem Aufladen der Batterie bzw. des Akkumulators dient. Ein derartiges Antriebskonzept ist in der Druckschrift DE 41 21 386 A1 näher erläutert, bei dem über eine KfZ-Anhängerkupplung eines ausschließlich mit Hilfe eines Elektromotors angetriebenen Kraftfahrzeuges, ein an- bzw. abkoppelbarer Energieanhänger fügbar ist, der einen Verbrennungsmotor als Antrieb für einen Generator umfasst. Die mit Hilfe des durch den Verbrennungsmotor angetriebenen Generators erzeugbare elektrische Energie dient dem Aufladen der Fahrzeugbatterie, wodurch die mit dem Elektrokraftfahrzeug durch ausschließliche Nutzung der in der Fahrzeugbatterie gespeicherten Gesamtladung erreichbare Reichweite vergrößert werden kann.

Ein ähnliches Antriebskonzept mit einem Energie liefernden Anhänger für Elektro-Automobile ist der Druckschrift DE 94 04 746.4 U1 zu entnehmen, bei dem ein Benzinmotor zum Antrieb des auf dem Energie liefernden Anhänger befindlichen Generators vorgesehen ist. Ein weiteres vergleichbares Stromaggregat auf einem Anhänger für Elektrokraftfahrzeuge ist der DE 37 32 869 A1 zu entnehmen.

Neben dem Einsatz von Diesel- und Benzinmotoren für den Antrieb des Generators zur Stromerzeugung wird in der Druckschrift DE 10 2009 045 979 A1 der Einsatz einer Gasturbine vorgeschlagen, die mit einem Gemisch aus Frischluft und einem festen, flüssigen und/oder gasförmigen Brennstoff betrieben wird und so gegenüber konventionellen Diesel- bzw. Benzinmotoren wirkungsgradoptimierter sowie auch emissionsärmer betreibbar ist. Vergleichbare Hybridantriebssysteme mit einer Gasturbinen-Generator-Kombination als elektrische Energiequelle zum Aufladen der für den Elektromotorantrieb erforderlichen Batterie- bzw. Akkumulatoreinheit sind ferner den Druckschriften DE 10 2009 000 530 A1, DE 10 2005 035 313 A1 sowie US 2011/0017532 A1 zu entnehmen.

Neben Diesel-, Benzin- und Gasturbinen-Antrieben für den Antrieb eines Generators zum Stromerzeugen und Aufladen eines Akkumulators bzw. einer Batterie für die Stromversorgung eines ausschließlich mit Hilfe wenigstens eines Elektromotors angetriebenen Kraftfahrzeuges ist ebenso der Einsatz eines Gasmotors bekannt, der mit Autogas (LPG) oder komprimiertem Erdgas (CNG) betrieben werden kann, wodurch verglichen zu Diesel- und Benzinmotoren geringere Abgasemissionen erreichbar sind. Derartige mit einem Gasmotor kombinierte hybrid angetriebene Elektrofahrzeuge sind bspw. in den Druckschriften DE 10 2008 051 324 A1, DE 10 2010 028 312 A1, DE 195 09 625 A1 sowie DE 10 2009 027 294 A1 beschrieben.

Die Druckschrift DE 10 2007 004 172 A1 offenbart ein Elektrofahrzeug, dessen Elektromotor durch stete Entladung einer mitgeführten Batterie mit elektrischer Energie versorgt wird. Ein ebenfalls mitgeführter, verbrennungsmotorisch angetriebener Generator vermag die Batterie im abgestellten Zustand des Kraftfahrzeuges, d. h. im Stillstand, wieder aufzuladen. Lediglich im Falle eines Notfalls wird ein sog. Notfahrbetrieb durch Aktivieren einer Bedieneinrichtung im Fahrzeug realisiert, bei dem das Fahrzeug ohne Traktionsbatterie mit eingeschränktem Fahrbetrieb möglich ist. Hierbei wird ausnahmsweise der verbrennungsmotorisch angetriebene Generator während der Fahrt aktiviert und die über den Generator zur Verfügung gestellte elektrische Leistung dem Elektromotorantrieb direkt zur Verfügung gestellt, d. h. unter Umgehung der Traktionsbatterie.

Die Druckschrift WO 2013/000534 A1 erläutert ein seriell hybrid aufgebautes Kraftfahrzeug, das einen elektrischen Energiespeicher aufweist, dessen Ladezustand mit Hilfe eines an sich bekannten Range-Extenders, der eine Brennkraftmaschine mit einem Generator umfasst, erhöht werden kann.
Die der Druckschrift entnehmbare technische Lehre bezieht sich auf eine ökonomische Leistungssteuerung der Brennkraftmaschine des Range-Extenders mit Hilfe des Generators. Hierbei ist die Brennkraftmaschine Drehzahl gesteuert, wobei die Drehzahl dadurch gesteuert wird, dass das Lastmoment des Generators gesteuert wird. Die Steuerung des Lastmomentes des Generators erfolgt wiederum aufgrund der Steuerung des Ladestroms mit dem der Generator den mitgeführten Energiespeicher auflädt.

Die Druckschrift DE 699 27 341 T2 beschreibt ein Hybridfahrzeug, das eine, einen Generator antreibende Verbrennungskraftmaschine vorsieht. Der Generator ist sowohl mit einer Batterie als auch mit einem zweiten Generator zum Antrieb der Antriebsräder verbunden. Die der Druckschrift entnehmbare technische Lehre befasst sich mit einer individuell auf die einzelnen Komponenten des Hybridfahrzeuges konzipierten Regelungslogik mit der der Betrieb zumindest des Verbrennungsmotors und des ersten Generators in Abhängigkeit von einer Vielzahl von Korrektur- und Soll-Ist-Wertvergleichen realisiert werden soll.

Die gattungsgemäße Druckschrift US 5,632,352 offenbart ein elektromotorisch betreibbares Kraftfahrzeug, zu dessen Antrieb ein Elektromotor vorgesehen ist, der über eine elektrische Energiespeichereinheit Energie bezieht. Die elektrische Energiespeichereinheit wird mit Hilfe eines Brennstoffmotor-betriebenen Generators aufgeladen. Das bekannte elektromotorische Antriebskonzept sieht jedoch eine Drehzahlregelung des Brennstoffmotors vor, die auf der Grundlage eines variablen Einstellsignals, das durch die Gaspedalstellung des Kraftfahrzeuges vorgebbar ist, beruht.

### Darstellung der Erfindung

Der Erfindung liegt die Aufgabe zugrunde ein Verfahren zum Antrieb eines Kraftfahrzeuges, zu dessen ausschließliche elektromotorischen Fortbewegung wenigstens ein Elektromotor mittel- oder unmittelbar mit einer Antriebswelle des Kraftfahrzeuges oder wenigstens einer Antriebsnabe eines Rades des Kraftfahrzeuges verbunden ist, wobei der wenigstens eine Elektromotor über eine Energiespeichereinheit mit elektrischer Energie versorgt wird, die wiederum von einem Generator mit elektrischem Ladestrom versorgt wird, der von einem Gasmotor angetrieben wird, derart weiterzubilden, so dass einerseits das bei elektromotorisch angetriebenen Kraftfahrzeugen bestehende Reichweitenproblem gemindert bzw. gelöst und andererseits auf kostengünstige Komponenten zurückgegriffen werden soll. Insbesondere gilt es entgegen dem vorherrschenden Entwicklungscredo, nämlich möglichst optimierte Einzelkomponenten zusammenzufügen, um ein reichweiten- und wirkungsgradoptimiertes Elektrofahrzeug zu realisieren, auf altbewährte Technologien zurückzugreifen, diese jedoch derart einzusetzen, so dass das Reichweitenproblem gleichsam gelöst wird, dies jedoch bei weitaus günstigerem Realisierungsaufwand.

Die Lösung der der Erfindung zugrunde liegenden Aufgabe ist im Anspruch 1 und 2 angegeben. Den Lösungsgedanken in vorteilhafter Weise ausbildende Merkmale sind Gegenstand der Unteransprüche sowie der weiteren Beschreibung zu entnehmen.

Die der Erfindung zugrunde liegende Idee greift das an sich bekannte, serielle hybride Antriebsprinzip auf, bei dem ein ausschließlich elektrisch angetriebenes Kraftfahrzeug wenigstens einen Elektromotor vorsieht, der mittel- oder unmittelbar mit einer KfZ-Antriebswelle oder wenigstens einer Antriebsnabe eines Rades des Kraftfahrzeuges verbunden ist und von einer Energiespeichereinheit mit elektrischer Energie versorgt wird, wobei die Energiespeichereinheit über eine mit einem Gasmotor angetriebenen Generator aufgeladen wird. Jedoch wendet sich der Lösungsgedanke bewusst von der vorherrschenden Entwicklungs- und Betriebstrategie von gattungsgemäßen Hybridfahrzeugen ab, indem die Energiespeichereinheit gerade nicht im Hinblick auf ihre Energiedichte und maximale Ladekapazität optimiert ausgelegt wird. Vielmehr ist die maximale Ladekapazität der Energiespeichereinheit derart dimensioniert, dass die darin gespeicherte elektrische Energie allenfalls für die Bewältigung einer Mindestreichweite bei ausschließlich elektromotorisch angetriebener Fahrweise, d.h. ohne eine Aufladung der Energiespeichereinheit mit der mitgeführten Gasmotor-Generator-Einheit, reicht. Durch das ausdrücklich sehr beschränkt gewählte Energiespeichervermögen der Energiespeichereinheit soll zumindest sichergestellt sein, dass eine Mindestreichweite von ca. 20 bis 50 km sichergestellt sein soll. Reichweitenbestimmend ist vielmehr der mitgeführte Treibstoff zur Verbrennung im Gasmotor, durch den der Generator angetrieben wird, der für ein Laden der Energiespeichereinheit sorgt.

Das lösungsgemäße Antriebskonzept stellt auf dem Gebiet der elektromotorischen Antriebstechnik einen Paradigmenwechsel dar, der sich klar gegen die allgemein erklärten Entwicklungsziele auf dem Gebiet von Elektro- bzw. Elektrohybridantriebssystemen, die eine Wirkungsgradoptimierung jeder einzelnen Komponente betreffen. Es steht außer Frage, dass derartige technisch optimierte Systeme hohe Entwicklungskosten aufwerfen, die sich letztlich für den Verbraucher in sehr hohen Anschaffungskosten äußern, so dass derartig hochmoderne, elektromotorisch angetriebene Kraftfahrzeuge lediglich einem begrenzten Interessentenkreis, der über das nötige Kapital verfügt, vorbehalten bleiben.

Eben gegen dieses technische Paradigma, das durch ein ständiges Verschieben technischer Leistungsgrenzen geprägt ist, wendet sich das lösungsgemäße Antriebskonzept mit dem Anspruch auf Basis vorhandener, altbewährter Technologien das bei Elektromobilen bestehende zentrale Reichweitenproblem gleichsam intelligent zu lösen, jedoch mit kostengünstigen Komponenten, die sich letztlich in einem signifikant reduzierten Anschaffungspreis äußern, um auf diese Weise die Akzeptanz und letztlich die Verbreitung von elektromotorisch angetriebenen Fahrzeugen deutlich zu maximieren.

Lösungsgemäß wird daher der Gasmotor während der Fortbewegung des Kraftfahrzeuges derart betrieben, dass ein dem Elektromotor zuordenbarer mittlerer Leistungsbedarf einer dem Gasmotor zuordenbaren mittleren Leistungsabgabe entspricht, so dass sich ein der Energiespeichereinheit zuordenbarer Ladezustand nicht oder lediglich innerhalb eines toleranzbelegten Ladezustandsbereiches ändert. Dies bedeutet, dass die im Mittel von dem Elektromotor aus der Energiespeichereinheit abgeforderte Leistung zur Fortbewegung des Kraftfahrzeuges mittelbar von dem mitgeführten Gasmotor erbracht wird, der vorzugsweise während des Kraftfahrzeugbetriebes kontinuierlich betrieben wird. Hierbei dient die Energiespeichereinheit lediglich als Energiezwischenspeicher, der durch die Stromerzeugung mit Hilfe der Gasmotor-Generatoreinheit kontinuierlich geladen wird, während der zum Antrieb des Kraftfahrzeuges dienende wenigstens eine Elektromotor von der Energiespeichereinheit elektrische Energie erhält. Selbstverständlich kann die seitens des wenigstens einen Elektromotors von der Energiespeichereinheit abgegriffene elektrische Ladung nicht mathematisch exakt der von Seiten des Generators der Energiespeichereinheit zugeführten elektrischen Ladung entsprechen, vielmehr schwankt der Ladezustand der Energiespeichereinheit durch die während des Kraftfahrzeugbetriebes vorherrschenden kontinuierlichen Entlade- und Ladevorgänge innerhalb eines Toleranzbereiches von etwa ±30 % um einen der Energiespeichereinheit zuordenbaren Ladezustand.

In einem Ausführungsbeispiel wäre es denkbar die Energiespeichereinheit lediglich als eine Art geeignet dimensionierten, elektrischen Kondensator auszubilden, dessen Ladekapazität prinzipbedingt im Vergleich zur schwergewichtigen Akkumulatoren gering ist. Durch die während des Betriebes des Kraftfahrzeuges ununterbrochene Aufladung des Kondensators sowie der in der gleichen Größenordnung erfolgenden Entladung durch den wenigstens einen Elektromotor ist die Bevorratung einer über den mittleren Energiebedarf des Elektromotors hinausreichende Ladungsmenge innerhalb der Energiespeichereinheit nicht erforderlich. Gleichwohl sollte die Ladekapazität der Energiespeichereinheit stets so gewählt sein, dass ein kurzfristig abrufbarer erhöhter Energiebedarf durch den wenigstens einen Elektromotor möglich ist, der bspw. durch einen kurzfristigen Beschleunigungsvorgang, bspw. im Wege eines Überholvorganges, verursacht sein kann.

Um eine kurzfristige erhöhte Entladung der Energiespeichereinheit durch einen kurzfristig erhöhten Leistungsbedarf des wenigstens einen Elektromotors zu kompensieren, gilt es den Gasmotor, der wirkungsgrad- und abgasoptimiert mit einer diskret vorgegebenen Drehzahl betrieben wird, innerhalb eines toleranzbelegten Drehzahlbereiches zu betreiben.

Alternativ ist es möglich den Gasmotor bei unterschiedlichen diskreten Drehzahlen zu betreiben, an denen der Gasmotor ebenso wirkungsgrad- und emissions- bzw. abgasoptimiert betrieben wird. Treten betriebsbedingte Fahrsituationen auf, bei denen ein erhöhter länger andauernder Energieverbrauch durch den wenigstens einen Elektromotor auftritt, bspw. wenn das Kraftfahrzeug lang anhaltende Steigungen zu überwinden hat, so wird der Gasmotor mit einer diskret vorgegebenen erhöhten Drehzahl betrieben, durch die die Energiespeichereinheit gleichfalls angepasst an den erhöhten Energiebedarf des wenigstens einen Elektromotors mit einem erhöhten Ladestrom beaufschlagt wird.

Das lösungsgemäße Betriebskonzept für den Antrieb eines Kraftfahrzeuges zu dessen ausschließlich elektromotorischen Fortbewegung wenigstens ein Elektromotor mittel- oder unmittelbar mit der Antriebswelle des Kraftfahrzeuges verbunden ist, nutzt als reichweitenbestimmende Energiequelle nicht die maximale Ladekapazität der mitgeführten Energiespeichereinheit, sondern vielmehr die Menge an mitgeführtem Brennstoff der zum Antrieb des Gasmotors und des damit zur Stromerzeugung verbundenen Generators dient. In einer bevorzugten Ausführungsform sind die Ladekapazität der Energiespeichereinheit sowie der Gasmotor und die zum Betrieb des Gasmotors mitgeführte Menge an Brennstoff derart aufeinander abgestimmt gewählt, so dass der elektrische Energieanteil, der durch die ausschließliche Verbrennung des mitgeführten Brennstoffes innerhalb des Gasmotors und des damit verbundenen Antriebs des Generators gewonnen wird, mindestens 60%, vorzugsweise mindestens 70% bis maximal 90% der mit dem Kraftfahrzeug erreichbaren maximalen Reichweite beträgt. Das bedeutet, dass der in einer voll aufgeladenen Energiespeichereinheit bevorratete elektrische Energieanteil lediglich 10% bis maximal 40% zur Maximalreichweite des Antriebssystems beiträgt. Denkbar wäre überdies der Betriebsfall, bei dem die Energieversorgungseinheit vollständig entladen ist, was bei Erreichen der maximalen Reichweite des Kraftfahrzeuges der Fall ist. Sollte es in diesem Fall nur möglich sein den Brennstofftank, d.h. den Gastank zu befüllen, nicht jedoch die elektrische Energiespeichereinheit, so würde in diesem Fall die maximale Reichweite des Kraftfahrzeuges ausschließlich vom technisch nutzbaren Energieinhalt der Brennstoffmenge abhängen, d.h. der Anteil des Brennstoffes an der maximal erreichbaren Reichweite wäre 100 %.

Gleichwohl das lösungsgemäße Betriebskonzept vom Dogma der ausschließlichen Nutzung elektrischer Energie im Sinne eines Null-Emissionsfahrzeuges abweicht, vermeidet das Antriebskonzept gewichtsbedingte und ladekapazitätsbedingte Reichweitenprobleme und ermöglicht darüber hinaus eine kostengünstige Realisierung von Elektro-Kraftfahrzeuge unter Verwendung herkömmlicher Technologien, wie bspw. dem Einsatz von konventionellen und kostengünstigen Akkumulatoren, vorzugsweise auf Basis einer Nickel-Metallhydrid-, Alkali-Mangan-, Zinkchlorid- oder Zink-Kohle-Batterie.

Auch besteht bereits eine umfangreich und flächendeckende Infrastruktur in Bezug auf Brennstoffe für Gasmotoren, vorzugsweise in Form von Autogas (LPG) oder verdichtetem Erdgas (CNG).

Neben der Möglichkeit des Aufladens des Energiespeichers während der Fortbewegung des Kraftfahrzeuges durch den erläuterten Gasmotor-Generator Betrieb sowie auch durch eine Energierückgewinnung während Bremsvorgängen, bei denen das umgekehrte elektrodynamische Prinzip genutzt wird, ist es ebenfalls möglich, bei entsprechendem Vorrat an Brennstoff das Kraftfahrzeug im Stillstand mit Hilfe des Gasmotors und dem damit verbundenen Generator aufzuladen. Somit kann das Kraftfahrzeug auch unabhängig von möglichen elektrischen Aufladestationen betrieben werden, so insbesondere in Gegenden, in denen eine Infrastruktur zum Aufladen von rein elektrisch angetriebenen Fahrzeugen fehlt oder noch nicht im ausreichenden Maße vorhanden ist.

Zur Realisierung des Antriebssystems für ein Kraftfahrzeug mit wenigstens einem Elektromotor, der mittel- oder unmittelbar mit einer Antriebswelle des Kraftfahrzeuges verbunden ist, einer elektrischen Energiespeichereinheit, die zur elektrischen Energieversorgung mit dem Elektromotor elektrisch verbunden ist, sowie einem Gasmotor, der zur elektrischen Stromerzeugung mit einem Generator in Wirkverbindung steht, der zur Ladestromversorgung elektrisch mit der elektrischen Energiespeichereinheit verbunden ist, sorgt ein monovalenter Gasmotor, der vorzugsweise mit LPG- oder CNG-Brennstoff angetrieben wird, wobei die mitgeführte Brennstoffmenge einen die maximale Reichweite des Kraftfahrzeuges wesentlich bestimmenden Energieinhalt besitzt. Hingegen weist die elektrische Energiespeichereinheit eine für das Kraftfahrzeug nicht reichweitenbestimmende Ladekapazität auf. Auch kann ein quasi-monovalenter Gasmotor zum Einsatz kommen, der neben der reinen Verbrennung von Autogas oder CNG bedarfsweise auch mit Benzin betrieben werden kann.

Der Einsatz eines Gasmotors im Unterschied zu konventionellen Benzinmotoren ermöglicht signifikant geringere Emissionswerte speziell unmittelbar nach dem Kaltstart, zumal Gasmotoren gegenüber konventionellen Verbrennungsmotoren aufgrund der höheren Verdichtung einen höheren Wirkungsgrad aufweisen. Ferner ist es möglich, den Wirkungsgrad von Gasmotoren zu steigern, indem der Gasmotor bei einem optimalen Betriebspunkt, d. h. bei einer diskret vorgegebenen Drehzahl betrieben wird. Darüber hinaus verfügen Gasmotoren gegenüber konventionellen Benzin- oder Dieselkraftstoff angetriebenen Verbrennungsmotoren über den Vorteil, dass ein Nachtanken grundsätzlich auch durch Anschluss an Gebäuden mit Gasanschluss möglich ist.

### Kurze Beschreibung der Erfindung

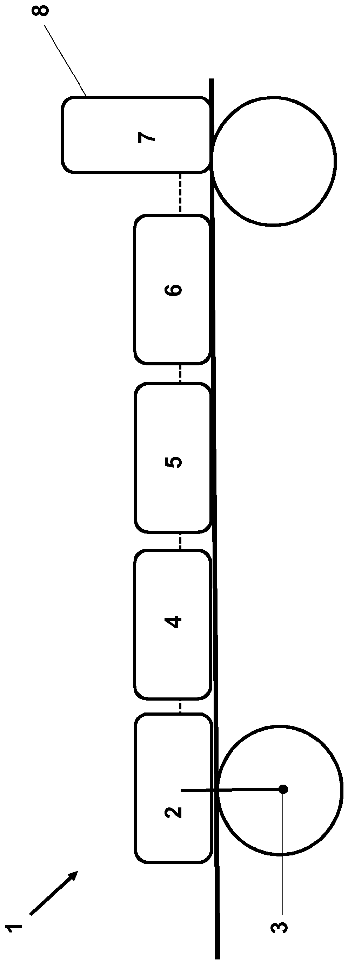

Die Erfindung wird nachstehend ohne Beschränkung des allgemeinen Erfindungsgedankens anhand eines Ausführungsbeispiels unter Bezugnahme auf die einzige Zeichnung exemplarisch beschrieben, diese zeigt:
Schematische Darstellung aller Komponenten für ein lösungsgemäßes elektromotorisch angetriebenes Kraftfahrzeug.

### Wege zur Ausführung der Erfindung, gewerbliche Verwendbarkeit

In der einzigen Figur ist das lösungsgemäße Antriebskonzept basierend auf einem ausschließlich elektromotorisch angetriebenen Kraftfahrzeug 1 illustriert, bei dem der zum Antrieb erforderliche wenigstens eine Elektromotor 2, der zum Antrieb der Antriebswelle 3 dient, mit einem elektrischen Energiespeicher 4 verbunden ist, der mit Hilfe eines mono- oder bivalenten Gasmotor 6 angetriebenen Generators 5 elektrisch aufgeladen wird. Der Brennstoff 7 zum Betrieb des Gasmotors 6 ist in einem vom Kraftfahrzeug 1 mitgeführten, geeigneten Brennstofftank 8 bevorratet. Die lösungsgemäße Betriebsweise gründet auf einer Angleichung des mittleren Leistungsbedarfes des Elektromotors 2 und der mittleren Leistungsabgabe des Gasmotors 6. Auf diese Weise kann sichergestellt werden, dass sich der Ladezustand der mitgeführten Energiespeichereinheit 4 während der Fahrt des Kraftfahrzeuges 1 nicht oder nicht wesentlich ändert.

Erst durch diese Betriebsweise wird es möglich, die elektrische Energiespeichereinheit 4 nicht wie im Falle aller bisher bekannten Lösungen als eine die Reichweite bestimmende Energiequelle auszubilden, vielmehr dient die Energiespeichereinheit 4 lediglich als Puffer- bzw. Zwischenspeichereinheit für die mit Hilfe des Gasmotors 6 und dem nachgeschalteten Generators 5 erzeugten elektrischen Energie. In einem theoretischen Extremfall könnte die elektrische Energiespeichereinheit 4 auch in Form eines bloßen Kondensators ausgebildet sein, dessen Ladekapazität systembedingt begrenzt ist und lediglich der Weiterleitung der im Kondensator zwischengespeicherten elektrischen Energie zum Elektromotor 2 dient. Typischerweise ist die Energiespeichereinheit 4 in Form einer Nickel-Metallhydrid, Alkali-Mangan-, Zinkchlorid- oder Zink-Kohle-Batterie ausgebildet.

Durch die vollkommen anders gelagerte Funktionsweise der Energiespeichereinheit 4 im Unterschied zu ladungskapazitätsoptimierten, hochmodernen Batteriesystemen, bestehen in Bezug auf Ladekapazitätseigenschaft keine qualitativ hochwertigen Ansprüche, so dass das lösungsgemäße Antriebskonzept den Einsatz von konventionellen, und insbesondere kostengünstigen Energiespeichereinheiten ermöglicht. Hinzukommt, dass das lösungsgemäße Verfahren den Betrieb eines Gasmotors 6 bei wenigstens einem optimierten Arbeitspunkt ermöglicht, so dass trotz konventioneller Antriebstechnik höchsten ökonomischen sowie auch ökologischen Ansprüchen entsprochen wird. Die mit dem lösungsgemäßen Antriebskonzept erreichbare maximale Reichweite des elektromotorisch angetriebenen Kraftfahrzeuges 1 wird in maßgeblicher Weise durch den mitgeführten Brennstoff 7, bspw. Autogas (LPG) oder verdichtetes Erdgas (CNG), zur Befeuerung des Gasmotors 6 bestimmt. Auf diese Weise werden Reichweiten ermöglicht, die den Reichweiten konventionell angetriebener Kraftfahrzeuge 1 entsprechen, so dass für den Endkunden keine Reichweiten-Ressentiments bestehen, wie dies bei Elektromobilen neuster Bauart der Fall ist.

### Bezugszeichenliste

- 1: Kraftfahrzeug
- 2: Elektromotor
- 3: An- bzw. Antriebsnabe
- 4: Energiespeichereinheit
- 5: Generator
- 6: Gasmotor
- 7: Brennstoff
- 8: Brennstofftank

## Patentansprüche

1. Verfahren zum Antrieb eines Kraftfahrzeuges (1), zu dessen ausschließlich elekromotorischer Fortbewegung wenigstens ein Elektromotor (2) mittel- oder unmittelbar mit einer Antriebswelle (3) oder Antriebsnabe des Kraftfahrzeuges (1) verbunden ist, der über eine Energiespeichereinheit (4) mit elektrischer Energie versorgt wird, die von einem Generator (5) mit elektrischen Ladestrom versorgt wird, der von einem Gasmotor (6) angetrieben wird, wobei der Gasmotor (6) während der Fortbewegung des Kraftfahrzeuges (1) derart betrieben wird, dass ein dem Elektromotor (2) zuordenbarer mittlerer Leistungsbedarf einer dem Gasmotor (6) zuordenbaren mittleren Leistungsabgabe entspricht, so dass sich ein der Energiespeichereinheit (4) zuordenbarer Ladezustand nicht oder lediglich innerhalb eines toleranzbelegten Ladezustandsbereiches ändert, **dadurch gekennzeichnet, dass** der Gasmotor (6) mit einer konstanten Drehzahl oder mit einer Drehzahl innerhalb eines toleranzbelegten Drehzahlbereiches betrieben wird, bei der, einem sogenannten Drehzahlbetriebspunkt, der Gasmotor (6) wirkungsgrad- und/oder abgasoptimiert betrieben wird.

2. Verfahren zum Antrieb eines Kraftfahrzeuges (1), zu dessen ausschließlich elekromotorischer Fortbewegung wenigstens ein Elektromotor (2) mittel- oder unmittelbar mit einer Antriebswelle (3) oder Antriebsnabe des Kraftfahrzeuges (1) verbunden ist, der über eine Energiespeichereinheit (4) mit elektrischer Energie versorgt wird, die von einem Generator (5) mit elektrischen Ladestrom versorgt wird, der von einem Gasmotor (6) angetrieben wird, wobei der Gasmotor (6) während der Fortbewegung des Kraftfahrzeuges (1) derart betrieben wird, dass ein dem Elektromotor (2) zuordenbarer mittlerer Leistungsbedarf einer dem Gasmotor (6) zuordenbaren mittleren Leistungsabgabe entspricht, so dass sich ein der Energiespeichereinheit (4) zuordenbarer Ladezustand nicht oder lediglich innerhalb eines toleranzbelegten Ladezustandsbereiches ändert, **dadurch gekennzeichnet, dass** der Gasmotor (6) bei unterschiedlichen diskreten Drehzahlen, bei sogenannten Drehzalbetriebspunkten, oder mit einer um diese Drehzahlbetriebspunkte innerhalb eines toleranzbelegten Drehzahlbereiches derart betrieben wird, dass bei Überschreiten eines den mittleren Leistungsbedarf übersteigenden Leistungsbedarf des Elektromotors (2), die Drehzahl des Gasmotors (6) stufenweise bzw. schaltbar oder im Rahmen des toleranzbelegten Drehzahlbereiches erhöht wird, und dass der Gasmotor (6) wirkungsgrad- und/oder abgasoptimiert betrieben wird.

3. Verfahren nach Anspruch 1 oder 2,
**dadurch gekennzeichnet, dass** der Gasmotor (6) ausgehend von dem wenigstens einen Drehzahlbetriebspunkt mit einer zeitlich begrenzten, drehzahlvariablen Boostfunktion betrieben wird, so dass ein Überschreiten eines den mittleren Leistungsbedarf übersteigenden Leistungsbedarfs des Elektromotors (2) ermöglicht wird.

4. Verfahren nach einem der Ansprüche 1 bis 3,
**dadurch gekennzeichnet, dass** der Gasmotor (6) mit einem Brennstoff in Form von Autogas (LPG) oder verdichtetem Erdgas (CNG) betrieben wird.

5. Verfahren nach einem der Ansprüche 1 bis 4,
**dadurch gekennzeichnet, dass** eine der Energiespeichereinheit (4) zuordenbare maximale Ladekapazität sowie eine mit dem Kraftfahrzeug (1) mitgeführte maximale Menge an Brennstoff (7) derart gewählt werden, dass eine mit dem Kraftfahrzeug (1) erreichbare maximale Reichweite zu einem Anteil der Reichweite durch ausschließliches Verbrennen des Brennstoffes (7) innerhalb des Gasmotors (6) und Umwandeln mittels des Generators (5) in elektrische Energie zum Antrieb des Kraftfahrzeuges (1) erzielt wird, und
dass der Anteil wenigstens 60 %, vorzugsweise wenigstens 70%, besonders bevorzugt wenigstens 90% beträgt.

6. Verfahren nach einem der Ansprüche 1 bis 5,
**dadurch gekennzeichnet, dass** der toleranzbelegte Ladezustandsbereich maximal ±30 % des der Energiespeichereinheit zuordenbaren Ladezustandes beträgt.

7. Verfahren nach einem der Ansprüche 1 bis 6,
**dadurch gekennzeichnet, dass** die elektrische Energiespeichereinheit (4) im Stillstand des Kraftfahrzeuges (1) durch Betrieb des Gasmotors (6) geladen wird.

## Claims

1. A method for driving a motor vehicle (1), for the exclusively electro-motorised movement of which at least one electric motor (2) is indirectly or directly connected to a drive shaft (3) or drive hub of the motor vehicle (1), which is supplied from an energy storage unit (4) with electrical energy, which is supplied with electrical charge current from a generator (5) driven by a gas engine (6),
**characterised in that** the gas engine (6) during movement of the motor vehicle (1) is operated in such a way that an average power demand which can be allocated to the electric motor (2) corresponds to an average power output which can be allocated to the gas engine (6), so that a charge state which can be allocated to the energy storage unit (4) does not change or changes merely within a tolerance-covered charge state range, wherein the gas engine (6) is operated at a constant speed or at a speed within a tolerance-covered speed range, at which, at a so-called speed operating point, the gas engine (6), in operation, is optimised with regard to efficiency and/or emissions.

2. The method for driving a motor vehicle (1), for the exclusively electro-motorised movement of which at least one electric motor (2) is connected indirectly or directly to a drive shaft (3) or drive hub of the motor vehicle (1), which is supplied with electrical energy from an energy storage unit (4), which is supplied with electric charge current from a generator (5) driven by a gas engine (6),
**characterised in that** the gas engine (6) during movement of the motor vehicle (1) is operated such that an average power demand, which can be allocated to the electric motor (2) corresponds to an average power output which can be allocated to the gas engine (6), so that a charge state which can be allocated to the energy storage unit (4) does not change or changes merely within a tolerance-covered charge state range, wherein the gas engine (6) is operated at varying discrete speeds, so-called speed operating points, or at a speed about these speed operating points within a tolerance-covered speed range in such a way that when a power demand of the electric motor (2) exceeds the average power demand, the
speed of the gas engine (6) is increased stepwise or in a switchable manner or in terms of a tolerance-covered speed range, and **in that** the gas engine (6) in operation is optimised with regard to efficiency and emissions.

3. The method according to claim 1 or 2, **characterised in that** the gas engine (6), starting from the at least one speed operating point, is operated with a temporally limited, variable-speed booster function, making it possible for a power demand of the electric motor (2) to exceed the average power demand.

4. The method according to one of claims 1 to 4, **characterised in that** gas engine (6) is operated with a fuel in the form of liquid petroleum gas (LPG) or compressed natural gas (CNG).

5. The method according to one of claims 1 to 5, **characterised in that** a maximum charge capacity which can be allocated to the energy storage unit (4) and a maximum quantity of fuel (7) carried along in the motor vehicle (1) are chosen such that a maximum operating range achievable with the motor vehicle (1), for a share in the operating range, is achieved by burning the fuel (7) exclusively within the gas engine (6) and conversion by means of the generator (5) into electrical energy for driving the motor vehicle (1), and **in that** the share is at least 60%, preferably at least 70%, especially preferably at least 90%.

6. The method according to one of claims 1 to 6, **characterised in that** the tolerance-covered charge state range is max. ±30% of the charge state which can be allocated to the energy storage unit.

7. The method according to one of claims 1 to 7, **characterised in that** the electrical energy storage unit (4) is charged during standstill of the motor vehicle (1) by operating the gas engine (6).

## Revendications

1. Procédé d'entraînement d'un véhicule automobile (1), pour la locomotion exclusivement électromotorisée duquel au moins un moteur électrique (2) est relié directement ou indirectement avec un arbre d'entraînement (3) ou un moyeu d'entraînement du véhicule automobile (1), qui est alimenté en énergie électrique par l'intermédiaire d'une unité de stockage d'énergie (4), qui est alimentée en courant de charge électrique par un générateur (5), qui est entraîné par un moteur à gaz (6), dans lequel le moteur à gaz (6) est mis en fonctionnement pendant la locomotion du véhicule automobile (1) de telle sorte que un besoin de puissance moyenne pouvant être affectée au moteur électrique (2) corresponde à une puissance moyenne émise pouvant être affectée au moteur à gaz (6), de sorte que un état de charge pouvant être affecté à l'unité de stockage d'énergie (4) ne varie pas ou uniquement à l'intérieur d'une plage d'état de charge sujette à des tolérances, **caractérisé en ce que** le moteur à gaz (6) est mis en fonctionnement avec une vitesse de rotation constante ou avec une vitesse de rotation comprise dans une plage de vitesse de rotation sujette à des tolérances, lors de laquelle, à ce qu'on appelle un point de fonctionnement de vitesse de rotation, le moteur à gaz (6) est mis en fonctionnement avec un rendement optimisé et/ou des gaz d'échappement optimisés.

2. Procédé d'entraînement d'un véhicule automobile (1), pour la locomotion exclusivement électromotorisée duquel au moins un moteur électrique (2) est relié directement ou indirectement avec un arbre d'entraînement (3) ou un moyeu d'entraînement du véhicule automobile (1), qui est alimenté en énergie électrique par l'intermédiaire d'une unité de stockage d'énergie (4), qui est alimentée en courant de charge électrique par un générateur (5), qui est entraîné par un moteur à gaz (6), dans lequel le moteur à gaz (6) est mis en fonctionnement pendant la locomotion du véhicule automobile (1) de telle sorte que un besoin de puissance moyenne pouvant être affectée au moteur électrique (2) corresponde à une puissance moyenne émise pouvant être affectée au moteur à gaz (6), de sorte que un état de charge pouvant être affecté à l'unité de stockage d'énergie (4) ne varie pas ou uniquement à l'intérieur d'une plage d'état de charge sujette à des tolérances, **caractérisé en ce que** le moteur à gaz (6), en présence de vitesses de rotation discrètes différentes, est mis en fonctionnement à ce que l'on appelle des points de fonctionnement de vitesse de rotation, ou avec un de ces points de fonctionnement de vitesse de rotation à l'intérieur d'une plage de vitesse de rotation sujette à des tolérances, de telle sorte que lors du dépassement d'un besoin de puissance du moteur électrique (2) dépassant le besoin de puissance moyenne, la vitesse de rotation du moteur à gaz (6) soit augmentée par étapes, respectivement de manière commutable ou dans le cadre de la plage de vitesse de rotation sujette à des tolérances et **en ce que** le moteur à gaz (6) est mis en fonctionnement avec un rendement optimisé et/ou des gaz d'échappement optimisés.

3. Procédé selon la revendication 1 ou 2, **caractérise en ce que** le moteur à gaz (6) est mis en fonctionnement à partir d'au moins un point de fonctionnement de vitesse de rotation avec une fonction boost à vitesse de rotation variable, limitée temporellement, de sorte qu'un dépassement d'un besoin de puissance dépassant le besoin de puissance moyenne du moteur électrique (2) soit rendu possible.

4. Procédé selon une des revendications 1 à 3, **caractérisé en ce que** le moteur à gaz (6) est mis en fonctionnement avec un combustible sous forme de gaz de pétrole liquéfié (GPL) ou gaz naturel comprimé (GNC).

5. Procédé selon une des revendications 1 à 4, **caractérise en ce que** une capacité de charge maximale pouvant être affectée à l'unité d'accumulation d'énergie (4) ainsi qu'une quantité maximale de carburant (7) alimentée dans le véhicule automobile (1) sont sélectionnées de telle sorte qu'une portée maximale pouvant être atteinte avec le véhicule automobile (1) soit obtenue sur une fraction de la portée en brûlant exclusivement le carburant (7) à l'intérieur du moteur à gaz (6) et en convertissant au moyen du générateur (5) en énergie électrique pour entraîner le véhicule automobile (1) et **en ce que** la fraction s'élève à au moins 60 %, de préférence au moins 70 %, de manière particulièrement préférée 90 %.

6. Procédé selon une des revendications 1 à 5, **caractérisé en ce que** la plage d'état de charge sujette à des tolérances s'élève au maximum à ± 30% de l'état de charge pouvant être affecté à l'unité de stockage d'énergie.

7. Procédé selon une des revendications 1 à 6, **caractérisé en ce que** l'unité de stockage d'énergie électrique (4) est chargée à l'arrêt du véhicule automobile (1) par le fonctionnement du moteur à gaz (6).
